# EUROPEAN PATENT SPECIFICATION

(11) **EP 2 962 548 B1**
(45) Date of publication and mention of the grant of the patent: **20.11.2019**
(21) Application number: 14757315.8
(22) Date of filing: 27.02.2014
(51) Int. Cl.: A01G 9/02

(54) **SYSTEM FOR CULTIVATING PLANTS ON VERTICAL OR INCLINED PLANES**
SYSTEM ZUR ZÜCHTUNG VON PFLANZEN AUF VERTIKALEN ODER SCHIEFEN EBENEN
SYSTÈME DE CULTURE DE PLANTES SUR DES PLANS VERTICAUX OU INCLINÉS

(30) Priority: 01.03.2013 ES 201330289 P
(43) Date of publication of application: 06.01.2016
(73) Proprietor: Universidad De Sevilla, 41013 Sevilla (ES)
(72) Inventor: FERNÁNDEZ CAÑERO, Rafael, E-41013 Sevilla (ES); FRANCO SALAS, Antonio, E-41013 Sevilla (ES); GAVIÑO ESCOBAR, Iván, E-41013 Sevilla (ES); HIDALGO ROMERO, Fernando, E-41013 Sevilla (ES); PÉREZ URRESTARAZU, Luis, E-41013 Sevilla (ES)
(74) Representative: Carpintero Lopez, Francisco
(86) International application number: PCT/ES2014/000025
(87) International publication number: WO 2014/131921

(56) References cited:
- EP-A1- 2 359 680
- EP-A1- 2 428 110
- WO-A1-2010/045708
- ES-A1- 2 393 571
- FR-A1- 2 902 967
- FR-A1- 2 960 384
- GB-A- 2 329 315
- GB-A- 2 446 041
- GB-A- 2 486 886
- JP-A- 2004 267 084
- US-A1- 2011 059 518
- US-A1- 2011 302 837

## Description

### Object of the invention

The present invention relates, as the title itself indicates, to a system for cultivating plants on vertical or inclined planes, which improves the development thereof immediately after transplanting.

More specifically, the system of the invention is formed by a grouping of modules, each one of which comprises a combination of flexible layers with reduced thickness, an exterior layer responsible for facilitating the aeration of the root part of the plant and an interior responsible for the homogenous distribution of water and nutrients.

### Background of the invention

At present, there exist on the market various modular systems for the vertical cultivation of plants, such as for example those which use boxes or containers of organic substrates such as those known commercially as "Modulo Green™", "ETL Easy Green™", etc.

However, in said systems, which use boxes or containers of organic substrates, although a good acceptance of the plant to the medium is achieved, in return they need a large volume of organic material, which when it is saturated with water, transmits significant loads to the auxiliary structure on which it is anchored and consequently to the receiver bracket. Furthermore, the boxes or containers which house them limit the development of the roots of the plants since these do not have sufficient exchanging of gases, preventing the correct root development.

As an alternative, there exist those known as hydroponic cultivations such as those shown in WO2010045708, US2011059518, US2011302837 or ES201100678 of this same holder. Basically, said hydroponic systems are formed from at least two layers between which are located the plants with bare roots or in an inert substrate and where the exterior layer serves to support the plant and the interior is responsible for transporting the water and the nutrients to the root.

However, although said systems have been widely used, meeting the requirements for which they have been designed and generally solving the problem of volume and weight, the same have a series of deficiencies or drawbacks which are solved by the present invention.

The first of these and the most obvious is that which is derived from the structure itself of the same, that is to say, from the use of the layers in the manner of pockets or receptacles for the plants, which produces deformations in the contour of the modules and which in turn cause tensions which end up deteriorating the cultivation support, also causing significant tensions in the root part of the plant which negatively influences the growth thereof and which add to the fact of having to be confined in a small space.

Furthermore, in the hydroponic systems in general, the main drawback is that the plant is subjected to an initial stress in the cultivating or pre-cultivating phase since the organic medium for developing the plant is changed for an inorganic one into which the nutrients are incorporated.

Related to the foregoing, but more important still, is the fact that said hydroponic cultivations, and in particular those described in the previously mentioned documents, do not improve the aerial development of the plant due to not being designed for improving the development of the buried part thereof, thus causing different degrees of root asphyxia.

Specifically, although said documents deal with the feeding of the root structure of the plants by means of the interior layer, which transports the water and the nutrients, they do not deal with the necessary exchange of gases which has to be produced in said root structure, that is to say, the gaseous or oxygen exchange which must exist between said root structure and the exterior medium so that an optimum catabolic process is produced therein.

More specifically, and as can be seen in the cited document, this problem is not only not resolved, but is not even mentioned, since the structure of the layers which are described do not allow said gaseous exchange, or at least not in an efficient manner.

Thus, for example, the document WO2010045708 is limited to describing that the exterior layer can be made of any material which provides protection for the substrate, for example recycled polypropylene felt. That is to say, at no point is the need for optimizing the gaseous exchange with the medium mentioned. Proof of this is also the fact that a material is used which essentially serves as a good water conducting material. JP 2004 267084 A discloses a system for cultivating plants with an exterior layer made from polyamide.

In the other cited documents, also at no point is reference made to the structure of the exterior layer, but it only impacts on the fact that water must be carried to the plant by way of the interior or intermediate layer, as the case may be, for which some examples of possible materials used are given, such as for example cotton fiber.

Thus, in the prior art no mention is made of the need to provide the system with correct aeration by means of the exterior layer, thus nor does it offer any solution. It is, therefore, the reason why the hydrophobic systems of the prior art, do not achieve good root development and consequently development of the plant itself, or even are detrimental to the plant due to the excess water in the roots thereof due to the use of very absorbent materials both in the exterior and interior layers thereof.

In addition to the foregoing drawbacks is added the fact that if it is desired to avoid root asphyxia of the plants or even the death thereof, when the aeration of the plants with the medium is not conveniently facilitated, it is necessary to control the irrigation of each type of plant installed, which requires expensive and complex automated irrigation systems.

### Description of the invention

The present invention describes a system for cultivating plants on vertical or inclined planes of the hydrophobic or semi-hydrophobic type which uses substrate of the same transplanted plant which resolves the drawbacks previously indicated, since it improves the adaptation and development thereof in a reduced space from the time which they are transplanted, both in the interior and exterior.

Specifically, the system for cultivating plants of the present invention comprises a plurality of modules where each one of them comprises at least two layers, one exterior responsible for the aeration of the plant in the buried part thereof and a subsequent layer responsible for the distribution of water and nutrients. Thus, by means of the special structure of these two layers, which is defined below, the catabolic process, which takes place in the roots, is optimized, that it to say, the exchange of masses between the root structure of the plant, the air and the feeding solution is optimized, facilitating a gaseous exchange suitable in the case of the exterior layer and a homogenous absorption in the case of the subsequent layer. In this way, a reduction of the stress period due to the transplanting of the plant is achieved, improving the result of the cultivation which in turn contributes to less need for replacing in the maintenance phase, as well as the immediate aesthetic result of the installation.

At the same time, the improved development of the plant in the aerial part thereof is due to the improved root development of the same, which contributes to the capacity to capture nutrients and to the capacity thereof for fixing to the support substrate, making it possible for it to develop greater mass in the aerial part, proportional to the root development.

More specifically, the modules of the system for cultivating plants of the present invention comprise:
- An interior layer in contact with the surface of the substrate where the root is housed and responsible for transporting the water and the nutrients in a homogenous manner by means of the constant contact of the root with a nourished surface, for which it meets the requirement of having great matrix potential, that is to say, that it has a great capacity for distributing and retaining or absorbing liquid, both in the vertical direction and in the horizontal direction in order to thus optimize the irrigation as far as possible.
- An exterior layer responsible for the oxygenation of the plant, for which it in turn meets two requirements:
   ∘ Absorbing the water from the substrate where the root of the plant is located; and
   ∘ Facilitating the passage of air therethrough.
   With this double function, said exterior layer takes water from the contour of the root and by means of an exchange process of natural masses such as the evaporation of the liquid, it removes the water which allows the passage of the air.
   However, in order to carry out this function, it is not sufficient that the layer has good permeability for the passage of the air, since in addition to this, there must be certain water absorption capacity such that said air, when passing through the layer, is loaded with moisture for an effective exchange of masses or in other words, that it has good capacity for evaporating water.
   Thus, the fundamental parameters to be taken into account at the time of selecting a suitable material for the exterior layer are:
   ∘ Permeability for the passage of the air;
   ∘ Efficiency of the saturation of the air; and
   ∘ Specific water consumption.
   Such that, said material has a high efficiency of saturation of air at low or very low passage velocities and a medium absorption capacity since if said absorption is too high, said layer fills with water and prevents the gaseous exchange.

Lastly, in addition to having the aforementioned properties, the material which composes the exterior layer must meet other requirements, such as not degrading in contact with the light and the water.

From all the foregoing, it is derived that it is critical for the growth of the plant that the contact area of the buried part of the same with the exterior layer must be the maximum area possible, for which in the present invention said exterior layer comprises a system of vertical folds which are opened or unfolded, increasing both the contact surface with the plant and the storage capacity, at the same time as avoiding the undesirable superficial deformations produced by the tensions, which would appear in the modules if the exterior and interior layers are sewn together in the manner of a pocket such as in the traditional systems, in which there are hardly any clearances between the same.

Thus each one of the modules which form the system of the invention is formed by the assembly of the two layers, exterior and interior, which are sewn or joined to each other such that they are do not prevent the progression of the roots. In turn, each one of the modules has non-definitive means for joining to each other such that a continuous surface with variable dimension suitable for the requirements can be created. Furthermore, the fact that the modules are joined to each other in a non-definitive manner facilitates the tasks of maintaining or replacing some of these, if it is so required.

In the same way, the system of the invention, composed of various modules, comprises fixing elements of the modules, as well as, if required, an auxiliary structure through which it is fixed to the support wall, if this is not done directly, and even an irrigation system.

### Description of the figures

In order to complement the description and with the aim of aiding a better understanding of the characteristics of the invention, according to a practical preferred exemplary embodiment of the same, a set of drawings is enclosed as an integral part of said description, in which the following is represented in an illustrative and non-limiting manner:
- Figure 1: show a perspective view of a possible assembly of a system for cultivating plants according to the present invention.
- Figure 2: shows a transversal sectional view of the system represented in figure 1.
- Figure 3: shows a frontal elevation view of the system of the previous figures in which the lateral fixings can also be observed.
- Figure 4.1 and 4.2: show both views of the folds, which each one of the exterior layers has in different degrees of opening.
- Figure 5: shows a sectioned perspective view of a possible embodiment of the invention in which a support element and the irrigation means are incorporated.
- Figure 6: shows a lateral view of the embodiment of figure 5. The invention comprises a system for cultivating plants according to the independent claim 1 and preferred embodiments are described in the dependent claims 2-12.

### Preferred embodiment of the invention

As observed in the figures and according to a possible practical embodiment of the invention, the system for cultivating plants in vertical or inclined planes of the invention comprises a plurality of modules, where each one of these in turn comprises an exterior layer (1) responsible for propitiating the aeration of the root part and an interior layer (2) for the distribution of water and nutrients, both flexible and with a combined thickness of 1.0 and 2.5 cm.

In terms of the exterior face (1), in order to determine the composition thereof, tests with different materials were carried out in an open circuit and circular section wind tunnel with low velocity, where a uniform stable air flow of between 0.25 to 0.5 m/s (corresponding to an unforced passage of air) is made to pass therethrough in controlled temperature and moisture conditions and a regular application of the water flow.

Specifically, the materials tested were those which in principle met initial minimum requirements for the three fundamental parameters previously explained, that is to say, permeability of the air, efficiency of air saturation and specific water consumption.

From said tests it was revealed that the improved behavior was obtained using the polyamide, and more specifically, one which comprised non-woven polyamide fibers joined to each other by means of a resin, adhesive or similar.

Furthermore, according to a preferred embodiment, micro perforations were made in said layer of polyamide fibers with the aim of further improving the permeability thereof of the air and water.

More specifically, for said material and for the values of velocity of the air previously indicated, the following results were obtained:
- In terms of the permeability of the passage of the air, a resistance to the passage of the same of between 3.57 and 35.49 Pa was obtained, a range, in which the contact of the air which passes through the layer, propitiates an optimum evaporation of the water (water which is absorbed from the buried part, allowing the passage of the air and facilitating the catabolic process in the root part) taking into account that, for values lower than 3 Pa, sufficient water-air contact is not produced and, for values greater than 30, a passage of air suitable for facilitating the gaseous exchange in the root does not take place.
- With the previous parameters, an efficiency of saturation of the air of between 45.45% and 35.09% was obtained, respectively, that is to say, that between 0.43 and 0.62 liters per hour and square meter of surface was evaporated.
- Lastly, in terms of the capacity to evaporate water, which is directly related to the specific water consumption, that is to say, the capacity to absorb water from the buried part of the plant, and therefore, to evaporate it upon contact with the air, the consumption was between 0.66 and 1.60 l/m^{∧}2, which constitutes an optimum range since from 1.5 l/m^{∧}2 there are difficulties propitiating the exchange of masses (since there is excessive water between the fibers) and therefore, the air required for the gaseous exchange in the root part is not allowed to pass, and below 0.6 l/m^{∧}2, the opposite effect is produced, that is to say, that sufficient water is not absorbed from the root part and does not fulfil the evaporating function thereof.

However, by way of example, the results obtained for another two of the tested materials are also indicated below, in this case two flexible artificial fabrics and which a priori were able to meet the initial requirements previously specified.
a) One of these materials was polyurethane, which, for the velocities of the air taken as reference, showed the following results:
   - Resistance to the passage of the air between 1.78 and 5.25 Pa, consequently the water-air contact was not sufficient.
   - In terms of the efficiency of saturation of the air, this was less than that of the polyamide, since it was between 40.89% and 15.57%, with which the capacity thereof to evaporate water reduces; and
   - The specific water consumption was established between 0.77 and 2.05, much higher than the polyamide, which, as previously explained, poses the problems of the saturation of the layer.

   In addition to the values indicated, they are not optimum for the principal parameters, this material was also discarded due to being excessively reactive upon contact with the light and water, deteriorating rapidly and considerably with the passing of time.
b) Another of the materials was the compound of polyester fibers, which, for the velocities of the air taken as reference, showed the following results:
   - Resistance to the passage of the air of between 3.10 and 15.56 Pa, much less than the polyamide;
   - Efficiency of saturation much less than that of the other materials previously tested of between -25.18% and 13.40%, with which the capacity thereof to evaporate water is clearly insufficient, not allowing the passage of the O2 required for the correct catabolic process which takes place in the buried part; and
   - Specific water consumption of 0.34 - 0.75 Im-2, clearly insufficient as it assumes that sufficient water is not absorbed from the root part.

Thus, once the suitability of the non-woven polyamide fiber is determined and for a preferred embodiment of the invention, the suitable thickness of the same is established between 6 mm and 15 mm, for thicknesses of the textile fibers above these values, they would have:
- lower aeration capacity upon increasing the resistance to the passage of the air (large pressure drop);
- lower capacity to saturate the air and thus evaporation when the air flow, which can pass through the fabric, is lower;
- greater consumption of water since the efficiency would be lower and a greater quantity is retained and subsequently drained by the fabric; and therefore
- greater retention of water, which is expressed in a greater weight per meter squared of fabric, causing greater loads on the support structure of the same;
   In terms of the interior layer (2) with large matrix potential and therefore for absorption and distribution of water according to a preferred embodiment it is composed of polypropylene fibers and other recycled natural fibers such as cotton, wool, etc. non-woven and micro perforated to improve the permeability thereof to water.

According to a possible practical embodiment of the invention, the density of this interior layer (2) is between 250-800 gr/m2, which is what is considered in tests as most appropriate for maintaining the moisture level which the plant requires; less density would not have sufficient capacity, and with greater density, it would incorporate more water than necessary with the risk of waterlogging, in addition to greater weight.

In addition, the joining of the exterior and interior layers is carried out by means of sewing with resistant synthetic thread forming grids of between 10 and 25 cm and where said sewing is carried out with a separation of between 3 and 4 mm of needle passage to facilitate the passage of the roots and not prevent the root development of the plants, that is to say, the expansion thereof to the rest of the surface.

Both layers, exterior (1) and interior (2), are also developed according to two principal criteria:
1.- Maximizing the contact of the exterior layer with the root part of the plant for optimizing the catabolic process; and
2.- Adapting the geometry of the layers to the geometry of the buried part of the plant in order to not transmit tensions to the root nor the support substrate.

For this, and as can be seen in the figures, which show a preferred embodiment of the invention, the exterior layer (1) comprises a vertical fold (6) approximately in the center of the grid which forms the module, a fold (6) which forms a pocket in which the corresponding plant or plants are housed.

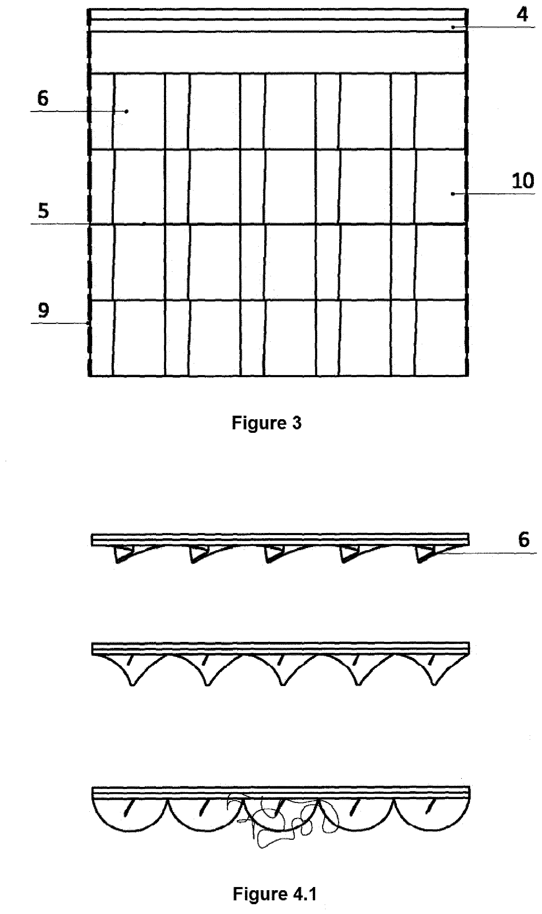

More specifically, in figure 4.1, the exterior layer (1) is represented and how an increase of the perimeter (7a and 7b) is produced from the opening of the fold (6), which allows both the contact surface with the buried part of the plant to be expanded and deformations and tensions in the assembly of the layers to be avoided.

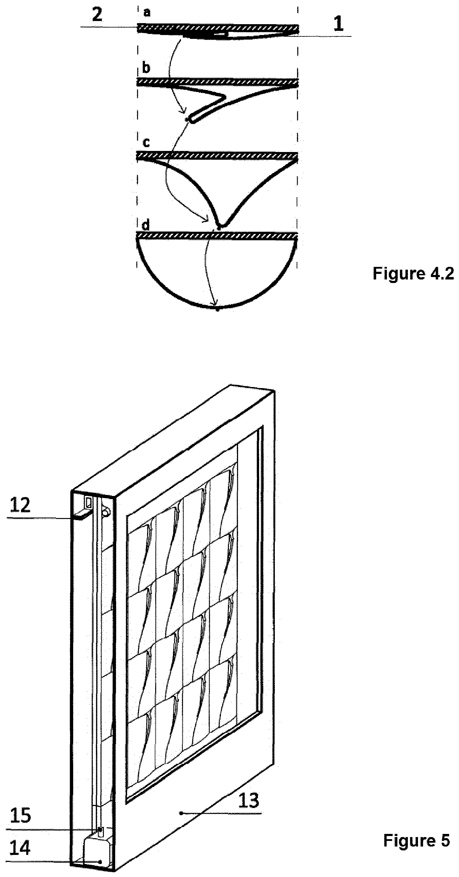

In figure 4.2, a preferred embodiment of said fold (6) is represented, which has a length in the upper horizontal edge thereof which forms the mouth which is equivalent, as a minimum, to 1.55 times the development or width of the interior layer (2) such that the volume which encloses the development of both is equivalent to the volume of a pot with a 9 cm diameter, recommended for the planting of these types of modules for grid widths of 13 cm, with which an ideal medium for avoiding tensions in the buried part of the plant is achieved.

In other words, the development of the upper and maximum perimeter of the fold (6) is equal to that of half the diameter circumference to the width of the grid.

Lastly, and according to a possible practical embodiment of the invention, with the aim of protecting the support wall from the moisture of the system of the invention, a third layer or subsequent layer (3) is incorporated composed of a waterproof sheet of flexible PVC sewn and thermosealed on the perimeter of the subsequent part of the same.

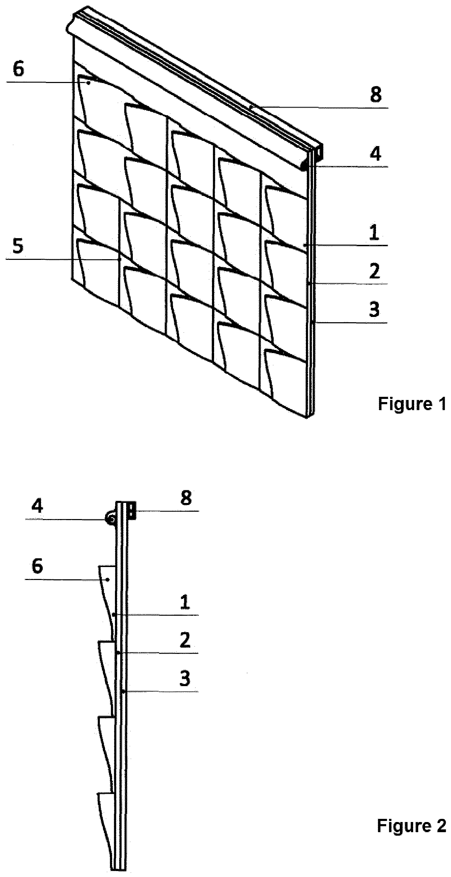

An exemplary embodiment which uses this waterproof layer of PVC can be seen in figure 2, wherein the section of the system of the invention is represented such that the superimposition of the exterior (1), interior (2) and subsequent (3) layers can be seen as well as the initial opening of the pockets formed by the folds (6) as well as a possible horizontal irrigation channeling (4) and a fixing profile (8) for the system, wherein said channeling (4) is formed by means of a coupling system such as Velcro™ or similar.

In addition, said channeling (4) can be perforated or have self-compensating drippers.

At the same time, in figure 3, which represents the elevation of the system of the invention, the distribution of the folds (6) in the center of each grid can be observed as well as the position which the lateral fixings (9) occupy in each module, which can be formed by synthetic zippers, buttons or similar means, which allow the joining of a number of said modules forming a continuous joining surface, protecting the contents from the moisture by means of overlappings of the PVC sheet, not represented.

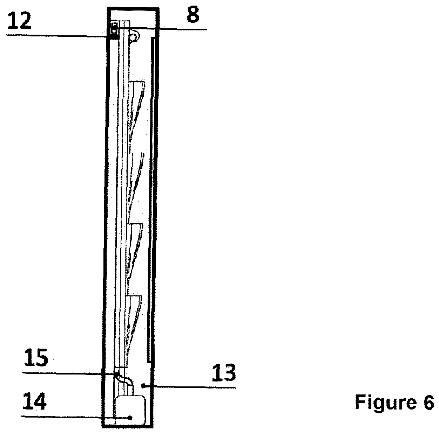

Lastly, in figures 5 and 6, both practical embodiments are represented in which there is included a support piece (11) for the assembly, which also serves as a storage container and to which is screwed or fixed the fixing profile (8) which supports the modules which form the system of the invention.

Said support (11) according to a possible embodiment, is formed from a resistance profile, either metallic or plastic, in a U-shape which includes the perimeter of the assembly, supporting on the upper part thereof, the fixing profile (8) previously indicated and on the lower part, forming a container (13) for the storage of water and nutrients, water which is distributed by a pump (14) housed at one of the ends thereof by way of a vertical channeling (15) up to the channeling line (4) located in the upper part.

## Claims

1. A system for cultivating plants on vertical or inclined planes which comprises a plurality of modules, wherein each one of said modules comprises at least one exterior layer (1) and one interior layer (2), both flexible and joined to each other and between which is housed the root structure of said plants, where the interior layer (2) is made of a material with a capacity to absorb and distribute liquid and nutrients to said root structure and where the exterior layer (2) is responsible for facilitating the aeration of the root, wherein in order to optimize the catabolic process that takes place in the roots by facilitating the gaseous exchange, the exterior layer (1):
- is made of polyamide,
- comprises non-woven polyamide fibers,
- is micro perforated, and
- has a thickness of between 6 and 15 mm.

2. The system for cultivating plants on vertical or inclined planes according to claim 1, **characterized in that** the exterior layer (1) comprises a vertical fold (6) which forms a pocket in which the corresponding plant or plants are housed.

3. The system for cultivating plants on vertical or inclined planes according to claim 2, **characterized in that** the fold (6) has a length, as a minimum, 1.55 times the width of the interior layer (2).

4. The system for cultivating plants on vertical or inclined planes according to claim 1, **characterized in that** the interior layer (2) is composed of polypropylene fibers and other recycled and micro perforated natural fibers for improving the permeability thereof to the water.

5. The system for cultivating plants on vertical or inclined planes according to claim 4, **characterized in that** the interior layer (2) has a density of between 250 and 800 gr/m2.

6. The system for cultivating plants on vertical or inclined planes according to the preceding claims, **characterized in that** the exterior (1) and the interior (2) layers have a combined thickness of between 1.0 and 2.5 cm.

7. The system for cultivating plants on vertical or inclined planes according to claim 1, **characterized in that** the joining between the exterior (2) and interior (1) layers was carried out by means of sewing with thread with a separation of between 3 and 4 mm of needle passage to facilitate the passage of the roots.

8. The system for cultivating plants on vertical or inclined planes according to claim 7, **characterized in that** the stitching between the exterior (2) and the interior (1) layers is carried out by means of a resistant synthetic thread forming grids of between 10 and 25 cm.

9. The system for cultivating plants on vertical or inclined planes according to claim 1, **characterized in that** each one of the modules comprises a subsequent layer (3) formed by a waterproof sheet of flexible PVC.

10. The system for cultivating plants on vertical or inclined planes according to claims 1 or 9, **characterized in that** each module has lateral fixings (9) which allow the joining of a number of said modules forming a continuous joining surface.

11. The system for cultivating plants on vertical or inclined planes according to any one of the preceding claims, **characterized in that** it comprises a horizontal irrigation channeling (4) and a fixing profile (8).

12. The system for cultivating plants on vertical or inclined planes according to claim 11, **characterized in that** it comprises a support piece (11) for the assembly and to which is screwed or fixed the fixing profile (8) which supports the modules which form the system of the invention and **in that** said support in the lower part thereof forms a storage container (13) for the surplus liquid from the irrigation and comprises a pump (14) for sending said liquid by way of a vertical channeling (15) to the channeling line (4).

## Patentansprüche

1. Ein System zum Kultivieren von Pflanzen auf vertikalen oder geneigten Ebenen, das eine Mehrzahl von Modulen aufweist, wobei jedes der Module zumindest eine äußere Schicht (1) und eine innere Schicht (2) aufweist, die beide flexibel sind und miteinander verbunden sind, und zwischen denen die Wurzelstruktur der Pflanzen untergebracht ist, wobei die innere Schicht (2) aus einem Material hergestellt ist mit einer Kapazität zum Absorbieren und Verteilen von Flüssigkeit und Nährstoffen an die Wurzelstruktur und wobei die äußere Schicht (2) verantwortlich dafür ist, eine Belüftung der Wurzel zu ermöglichen, wobei die äußere Schicht (1), um den katabolischen Prozess zu optimieren, der in den Wurzeln durch Ermöglichen des gasförmigen Austauschs stattfindet:
- aus Polyamid hergestellt ist,
- Flies-Polyamidfasern aufweist,
- mikroperforiert ist und
- eine Dicke von zwischen 6 und 15 mm aufweist.

2. Das System zum Kultivieren von Pflanzen auf vertikalen oder geneigten Ebenen gemäß Anspruch 1, **dadurch gekennzeichnet, dass** die äußere Schicht (1) eine vertikale Falte (6) aufweist, die eine Tasche bildet, in der die entsprechende/n Pflanze/n untergebracht ist/sind.

3. Das System zum Kultivieren von Pflanzen auf vertikalen oder geneigten Ebenen gemäß Anspruch 2, **dadurch gekennzeichnet, dass** die Falte (6) eine Länge von einem Minimum von 1,55 Mal der Breite der inneren Schicht (2) aufweist.

4. Das System zum Kultivieren von Pflanzen auf vertikalen oder geneigten Ebenen gemäß Anspruch 1, **dadurch gekennzeichnet, dass** die innere Schicht (2) aus Polypropylenfasern und anderen recycelten und mikroperforierten Naturfasern zusammengesetzt ist, um die Wasserdurchlässigkeit zu verbessern.

5. Das System zum Kultivieren von Pflanzen auf vertikalen oder geneigten Ebenen gemäß Anspruch 4, **dadurch gekennzeichnet, dass** die innere Schicht (2) eine Dichte von zwischen 250 und 800 gr/m2 aufweist.

6. Das System zum Kultivieren von Pflanzen auf vertikalen oder geneigten Ebenen gemäß den vorhergehenden Ansprüchen, **dadurch gekennzeichnet, dass** die äußere (1) und die innere (2) Schicht eine kombinierte Dicke von zwischen 1,0 und 2,5 cm aufweisen.

7. Das System zum Kultivieren von Pflanzen auf vertikalen oder geneigten Ebenen gemäß Anspruch 1, **dadurch gekennzeichnet, dass** die Verbindung zwischen der äußeren (2) und der inneren (1) Schicht durch Nähen mit einem Faden ausgeführt wurde, mit einem Abstand von zwischen 3 und 4 mm des Nadeldurchgangs, um den Durchgang der Wurzeln zu ermöglichen.

8. Das System zum Kultivieren von Pflanzen auf vertikalen oder geneigten Ebenen gemäß Anspruch 7, **dadurch gekennzeichnet, dass** die Naht zwischen der äußeren (2) und der inneren (1) Schicht durch einen widerstandsfähigen synthetischen Faden ausgeführt wird, der Gitter zwischen 10 und 25 cm bildet.

9. Das System zum Kultivieren von Pflanzen auf vertikalen oder geneigten Ebenen gemäß Anspruch 1, **dadurch gekennzeichnet, dass** jedes der Module eine nachfolgende Schicht (3) aufweist, die durch eine wasserdichte Lage aus flexiblem PVC gebildet ist.

10. Das System zum Kultivieren von Pflanzen auf vertikalen oder geneigten Ebenen gemäß Anspruch 1 oder 9, **dadurch gekennzeichnet, dass** jedes Modul seitliche Befestigungsvorrichtungen (9) aufweist, die die Verbindung einer Anzahl der Module ermöglichen, die eine durchgehende Verbindungsoberfläche bilden.

11. Das System zum Kultivieren von Pflanzen auf vertikalen oder geneigten Ebenen gemäß einem der vorhergehenden Ansprüche, **dadurch gekennzeichnet, dass** dasselbe ein horizontales Bewässerungskanalsystem (4) und ein Befestigungsprofil (8) aufweist.

12. Das System zum Kultivieren von Pflanzen auf vertikalen oder geneigten Ebenen gemäß Anspruch 11, **dadurch gekennzeichnet, dass** dasselbe ein Tragestück (11) für den Zusammenbau aufweist und an das Befestigungsprofil (8) geschraubt oder an demselben befestigt ist, das die Module trägt, die das System der Erfindung bilden, und dadurch, dass der Träger in dem unteren Teil desselben einen Lagerbehälter (13) für die überschüssige Flüssigkeit von der Bewässerung bildet und eine Pumpe (14) zum Befördern der Flüssigkeit zu der Kanalsystemleitung (4) durch ein vertikales Kanalsystem (15) aufweist.

## Revendications

1. Système de culture de plantes sur des plans verticaux ou inclinés qui comprend une pluralité de modules, dans lequel chacun desdits modules comprend au moins une couche extérieure (1) et une couche intérieure (2), les deux étant souples et jointes l'une à l'autre et entre lesquelles est logée la structure racinaire desdites plantes, où la couche intérieure (2) est constituée d'un matériau ayant une capacité d'absorber et de répartir du liquide et des nutriments sur ladite structure racinaire et où la couche extérieure (2) est chargée de faciliter l'aération des racines, dans lequel, afin d'optimiser le processus catabolique qui a lieu dans les racines en facilitant l'échange gazeux, la couche extérieure (1) :
- est constituée de polyamide,
- comprend des fibres de polyamide non tissées,
- est micro-perforée, et
- possède une épaisseur d'entre 6 et 15 mm.

2. Système de culture de plantes sur des plans verticaux ou inclinés selon la revendication 1, **caractérisé en ce que** la couche extérieure (1) comprend un pli vertical (6) qui forme une poche dans laquelle la plante ou les plantes correspondantes sont logées.

3. Système de culture de plantes sur des plans verticaux ou inclinés selon la revendication 2, **caractérisé en ce que** le pli (6) possède une longueur, au minimum, de 1,55 fois la largeur de la couche intérieure (2).

4. Système de culture de plantes sur des plans verticaux ou inclinés selon la revendication 1, **caractérisé en ce que** la couche intérieure (2) est composée de fibres de polypropylène et d'autres fibres naturelles recyclées et micro-perforées pour améliorer la perméabilité de celle-ci à l'eau.

5. Système de culture de plantes sur des plans verticaux ou inclinés selon la revendication 4, **caractérisé en ce que** la couche intérieure (2) possède une densité d'entre 250 et 800 gr/m².

6. Système de culture de plantes sur des plans verticaux ou inclinés selon les revendications précédentes, **caractérisé en ce que** les couches extérieure (1) et intérieure (2) possèdent une épaisseur combinée d'entre 1,0 et 2,5 cm.

7. Système de culture de plantes sur des plans verticaux ou inclinés selon la revendication 1, **caractérisé en ce que** la jonction entre les couches extérieure (2) et intérieure (1) a été réalisée au moyen d'une couture avec fil avec une séparation d'entre 3 et 4 mm de passage d'aiguille pour faciliter le passage des racines.

8. Système de culture de plantes sur des plans verticaux ou inclinés selon la revendication 7, **caractérisé en ce que** le piquage entre les couches extérieure (2) et intérieure (1) est réalisé au moyen d'un fil synthétique résistant formant des grilles d'entre 10 et 25 cm.

9. Système de culture de plantes sur des plans verticaux ou inclinés selon la revendication 1, **caractérisé en ce que** chacun des modules comprend une couche supplémentaire (3) formée par une feuille imperméable à l'eau en polychlorure de vinyle, PVC, souple.

10. Système de culture de plantes sur des plans verticaux ou inclinés selon les revendications 1 ou 9, **caractérisé en ce que** chaque module possède des fixations latérales (9) qui permettent la jonction d'un certain nombre desdits modules formant une surface de jonction continue.

11. Système de culture de plantes sur des plans verticaux ou inclinés selon l'une quelconque des revendications précédentes, **caractérisé en ce qu'**il comprend une canalisation d'irrigation horizontale (4) et un profilé de fixation (8).

12. Système de culture de plantes sur des plans verticaux ou inclinés selon la revendication 11, **caractérisé en ce qu'**il comprend une pièce de support (11) pour l'assemblage et sur laquelle est vissé ou fixé le profilé de fixation (8) qui porte les modules qui forment le système selon l'invention et **en ce que** ledit support dans sa partie inférieure forme un récipient de stockage (13) pour le liquide en surplus de l'irrigation et comprend une pompe (14) pour envoyer ledit liquide au moyen d'une canalisation verticale (15) à la ligne de canalisation (4).
